# EUROPEAN PATENT APPLICATION

(11) **EP 4 779 172 A1**
(43) Date of publication of application: **22.07.2026**
(21) Application number: 26151963.1
(22) Date of filing: 15.01.2026
(51) Int. Cl.: F16G 11/04, F16G 11/02

(54) **COUPLING DEVICE**

(30) Priority: 21.01.2025 IT 202500000981
(71) Applicant: Uberti S.r.l., 25033 Cologne (BS) (IT)
(72) Inventor: Uberti, Paolo, Cologne (IT)
(74) Representative: Lunati & Mazzoni S.r.L.

(57) **Abstract**

Device (1) for coupling a cord (10), the latter defining a main development line (1a), a radial direction (1b), a circumferential direction (1c) and a first end (11), the device (1) comprising a tip (2) suitable for containing the first end (11) and defining a first internal cavity (20) suitable for containing the first end (11), an access (20a) to the first cavity (20), a partially rigid covering element (3) constrained to the first end (11) and compressing the first cord (10) in a radial direction (1b), the element (3) being intended to be housed in the first cavity (20) when constrained to the first end (11) and defining a first portion (30) proximal to the cord (10); the first cavity (20) having dimensions in the radial direction (1b) greater than the access (20a), the edge of the access (20a) defining obstruction walls (21) extending in the radial direction (1b), the element (3) comprising a second portion (31) flexible in the radial direction (1b), the second portion (31) defining a proximal portion (31a) constrained to the first portion (30) and a distal portion (31b) opposite to the proximal portion (31a), the second portion (31) being stressed by the cord (10) in the radial expansion direction (1b) and being deformable to allow the insertion of the element (3) entirely into the first cavity (20) through the access (20a), so that the interaction between the distal portion (31b) and the obstruction walls (21), after the insertion of the element (3) into the first cavity (20), prevents the separation of the cord (10) and the tip (2).

## Description

The present invention relates to a coupling device of the type specified in the preamble of the first claim.

The subject matter of the present invention is a coupling device which is primarily applied in the field of clothing and accessories.

As is known, cord tips, or caps, are instruments that allow the ends of a cord to be stiffened so as to facilitate the insertion of the ends into holes. Some examples of cords that can be coupled with tips can be shoelaces or drawstrings for clothing. For example, shoelace tips allow you to insert the lace into the hole of a shoe without the risk of the end fraying while inserting it into the hole and the strands that make up the lace separating while inserting it into the hole of the shoe.

Similar tips are also used in coats and jackets.

The most well-known tips consist of a coating of the terminal portion of the cord with a high-resistance polymer. For example, such a tip can be wrapped around the string and secured to it using adhesive, heat shrink, or other methods.

These tips are cheap and achieve their aim, however they are not very resistant over time and are not very aesthetically pleasing.

Therefore, tips made of metal material have been developed which are more valuable and durable.

There are also other locking devices not pertaining to the field of the present invention. For example, patent application US-A-3366405, published in 1968, describes emergency brake cables for vehicles and for constraining the structures coupled to these cables to the brake housing, so that they are axially immobile and watertight with respect to the brake housing.

The known art described above has some significant drawbacks.

In particular, the known locking devices for metal or rigid tips consist of glues or deformations of the tip itself. They are thus complex and expensive to manufacture and do not guarantee an ideal seal of the tip itself.

This causes them to have a complex structure, which requires elaborate production processes.

In this situation, the technical task underlying this invention is to devise a coupling device capable of substantially overcoming at least part of the aforementioned drawbacks.

Within the scope of this technical task, an important aim of the invention is to obtain a coupling device that has a structure of reduced complexity.

Another important aim of the invention is to provide a coupling device that requires less complex production processes.

A further important aim of the invention is to provide a coupling device that guarantees a high seal over time.

The specified technical task and purposes are achieved by a coupling device as claimed in the appended claim 1.

Preferred technical solutions are highlighted in the dependent claims.

The features and advantages of the invention are clarified below by a detailed description of preferred embodiments of the invention, with reference to the attached drawings, wherein:

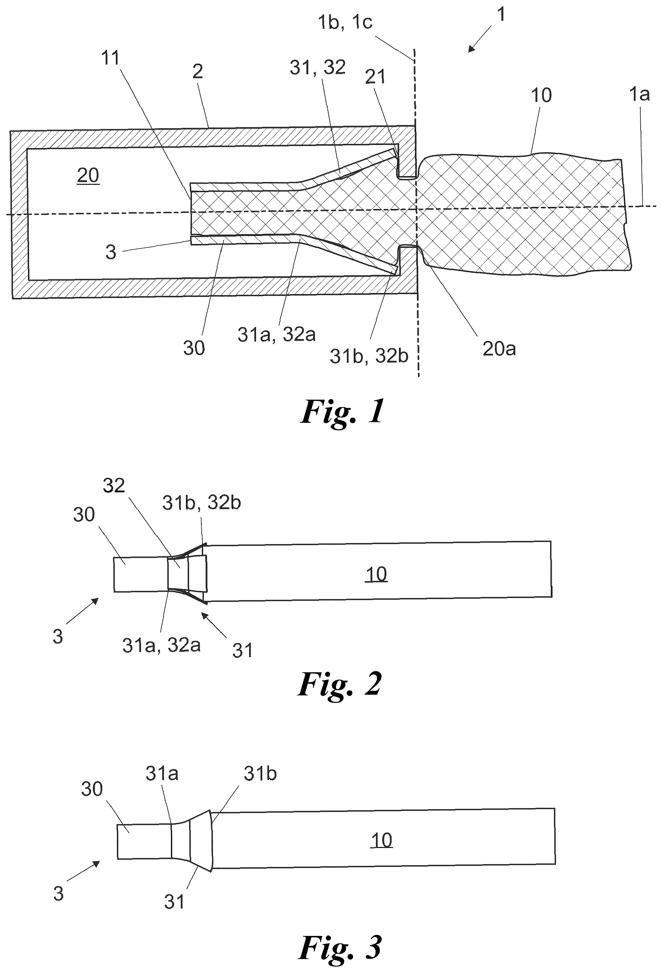

**Fig. 1** shows a first longitudinal section of a coupling device according to the invention;
**Fig. 2** shows a first configuration of a portion of a coupling device according to the invention; and
**Fig. 3** shows a second configuration of a portion of a coupling device according to the invention.

In this document, the measurements, values, shapes, and geometric references (such as perpendicularity and parallelism), when associated with words like "about" or other similar terms such as "approximately" or "substantially", should be understood as allowing for measurement errors or inaccuracies due to production and/or manufacturing errors and, especially, minor deviations from the value, size, shape, or geometric reference with which they are associated. For example, such terms, when associated with a value, preferably indicate a deviation not exceeding 10% of the value itself.

Moreover, terms such as "first", "second", "upper", "lower", "main", and "secondary" when used do not necessarily identify an order, priority of relation, or relative position but may simply be used to more clearly distinguish different components from one another.

Unless otherwise specified, as inferred from the following discussions, terms such as "processing", "computing", "determining", "computation", or similar should be understood as referring to the action and/or processes of a computer or similar electronic computation device that manipulates and/or transforms data represented as physical quantities, such as electronic magnitudes of records of a computing system and/or memories, into other data similarly represented as physical quantities within computer systems, records, or other information storage, transmission, or display devices.

Unless otherwise indicated, the measurements and data reported in this text are to be considered as performed in International Standard Atmosphere ICAO (ISO 2533:1975).

With reference to the Figures, the device according to the invention is generally denoted by reference number 1. It is preferably a coupling device for a cord **10** used for items of clothing. For example, the cord 10 may be a drawstring for coats, jackets or shoes.

The invention therefore also comprises a cord 10 for items of clothing and an item of clothing comprising at least one cord 10 in turn comprising a coupling device 1 according to the invention.

For example, it may consist of a bundle of twisted threads. It can define a main development line **1a.** The development line 1a defines the direction in which the cord 10 is primarily developed. It can take assume a conformation that depends on the position of the cord 10. The cord 10 may define a radial direction **1b.** It is a direction that can extend perpendicular to the development line 1a. In detail, the radial direction 1b can be defined in any cross-section of the cord 10. The cord 10 may preferably define a circumferential direction **1c.** It may be a direction tangential to the edge of the cord 10 parallel to the cross-section of the cord 10 lying in a plane perpendicular to the development line 1a. The cord 10 can also have a section normal to the circumferential development line 1a, rectangular or flattened or something else.

The cord 10 preferably defines a first end **11.** It can correspond to a terminal of the cord 10. For example, the end 11 can correspond to the end to be inserted into a hole. For example, the end 11 may be the end that goes into a hole in a shoe. The device 1 may comprise a tip **2.** It may be a tip suitable for containing the first end 11. The tip 2 preferably defines a first cavity **20.** It may be an internal cavity. In detail, the first cavity 20 is adapted to contain the first end 11. Therefore, the first end 11 can be inserted into it. Further, the tip 2 can define an access **20a.** The latter may be an access to the first cavity 20. Therefore, it can be the access hole into which the first end 11 is inserted in order to be accommodated inside the first cavity 20. In this regard, the access 20a is preferably centred on the development line 1a. The end 11 can then be inserted into the access 20a such that the insertion occurs along the development line 1a.

The first cavity 20 preferably has larger dimensions in the radial direction 1b than the access 20a. Therefore, the access 20a also performs a narrowing function with respect to the cavity 20. In this way, the end 11 inserted into the cavity 20 can be retained more easily inside the cavity 20. In fact, the cord 10 can have larger radial dimensions than the access 20a. In particular, the cord 10 can have greater dimensions in the radial direction 1b than the access 20a when it is not subject to stress in the radial direction 1b. The passage for the access 20a causes the portion of the cord 10 located at the access 20a, when the end 11 is inserted into the cavity 20, to be compressed with respect to the portion of the cord 10 outside the cavity 20 and to the portion of the cord 10 inside the cavity 20. For example, if the cord 10 comprises twisted threads, at least the outermost threads with respect to a cross-section may be primarily subjected to compression at the access 20a when inserted therein.

In particular, the edge of the access 20a may define obstruction walls **21.** They may be walls that extend in the radial direction 1b. For example, the obstruction walls 21 can primarily extend along a radial direction 1b from the access 20a to the inner walls of the cavity 20. For example, the obstruction walls 21 can primarily extend along a perpendicular direction to the walls of the cavity 20.

The device 1 preferably comprises a covering element **3.** In detail, the element 3 may be partially rigid. For example, it may be an element made of rigid polymeric material, but able to be deformed. The element 3 may be constrained to the first end 11. For example, it may be an element that surrounds the first end 11. For example, it may be a radially symmetrical element with the axis of symmetry aligned with the development line 1a. In particular, the element 3 can compress the first cord 10 in the radial direction 1b. For example, it can be a cylindrical element capable of compressing the first end 11 in a substantially uniform manner in the radial direction 1b. Alternatively, the element 3 may be a band that wraps the first end 11 around the development line 1a. The element 3 is adapted to be housed in the first cavity 20 when constrained to the first end 11. Therefore, the element 3 has the function of covering, at least in part, the first end 11 and of facilitating its insertion into the access 20a.

The element 3 may preferably be made of polymeric material. Further, it may be constrained to the first end 11 by adhesive. Alternatively, the element 3 may be constrained to the first end 11 by heat-sealing. In this way, the element 3 can be advantageously constrained to the first end 11 in a simple and effective way, without using complex tools.

The covering element 3 is preferably known and used for low quality strings apart from the modifications described below.

The element 3 defines a first portion **30.** It is a proximal portion with respect to the cord 10. In particular, it is the portion of the element 3 directly in contact with the end 11. It can be a portion surrounding and compressing the first end 11. For example, the first portion 30 may preferably have a cylindrical shape. In detail, the first portion 30 may have its axis aligned with the development line 1a. For example, it may be a cylindrical band constrained to the first end 11. For example, the element 3 may be similar to the elements constrained to the ends of the strings used for shoes.

Advantageously, the element 3 preferably comprises a second portion **31.** It is a flexible portion in the radial direction 1b. In particular, the second portion 31 defines a proximal portion **31a**. It is a portion constrained to the first portion 30. Further, the second portion 31 defines a distal portion **31b**. The latter is an opposite portion to the proximal portion 31a. In general, the second portion 31 may be a tubular portion constrained to the first portion 30 at the proximal portion 31a.

The second portion 31 is preferably stressed by the cord 10 in the radial expansion direction 1b.

In fact, as the cord 10 is compressed at the first end 11 and, in particular, at the first portion 30, at the elements of the second portion 31, the cord 10 can be expanded with respect to the portion constrained to the first portion 30. Therefore, the second portion 31 can be pushed by the cord 10 in the radial direction 1b so as to move away from the cord 10 itself. In particular, the proximal portion 31a, being constrained to the first portion 30, in the absence of stress, tends to maintain a closer position to the cord 10 than the distal portion 31b. For example, if the element 3 has a cylindrical shape, the second portion 31, in the absence of external stresses, can have the shape of a truncated cone.

The second portion 31 is preferably deformable. In this way it allows the insertion of the element 3 entirely into the first cavity 20. In detail, the insertion takes place through the access 20a. In this way, an interaction is created between the distal portion 31b and the obstruction walls 21, after the insertion of the element 3 into the first cavity 20. In this way, the separation of the cord 10 and the tip 2 is prevented. Therefore, the distal portion 31b performs the function of hooking onto the obstruction walls 21 when the cord 10 is pulled outwards, preventing the extraction of the cord 10 from the tip 2.

The second portion 31 preferably comprises a plurality of interference elements **32.** They can be flexible portions at least in the radial direction 1b. Furthermore, each occupies a portion of the cord 10 in the circumferential direction 1c. Therefore, the interference elements 32 may be portions protruding from the first portion 30. The proximal portion 31a may consist of the proximal ends 32a. The distal portion 31b may consist of the distal ends 32b.

The first portion 30 and the interference elements 32 may be in one piece.

Preferably, the interference elements 32 may be primarily developed along a plane. For example, if the element 3 is an element having development primarily in one surface, the interference elements 32 may, in turn, be each primarily developing in one surface. In this regard, they can develop primarily along one plane. The development plane of each of the interference elements 32 may be partly in common with the development surface of the first portion 30.

The interference elements 32 can preferably be between 2 and 8 in number. This number of interference elements 32 allows to make the device 1 more efficient and structurally less complex. Therefore, it can be more efficient and easier to make or produce.

In detail, the interference elements 32 each define a free distal end 32b and a proximal end 32a, constrained to the first portion 30 and opposite the proximal end 32a. The distal ends 32b are preferably stressed by the cord 10 in the radial expansion direction 1b. In fact, like what has been described above, the cord 10 is compressed at the first end 11. In particular, the cord 10 is compressed at the first portion 30. Further, at the interference elements 32, the cord 10 is expanded with respect to its portion constrained to the first portion 30. Consequently, the expansion of the cord 10 moves at least the distal ends 32b apart in the radial direction 1b. The distal ends 32b are preferably deformable. In this way, they can allow the insertion of the element 3 entirely into the first cavity 20 through the access 20a. In this regard, the dimensions in the radial direction 1b of the first portion 30 can be smaller than the dimensions of the access 20a. In this way, the first portion 30 can be easily inserted into the access 20a. Furthermore, the distal ends 32b can extend, due to the thrust imparted on them by the cord 10, away from the cord 10 in the radial direction 1b and be compressed in the opposite direction, during insertion, when the interference elements 32 are also inserted into the access 20a. In fact, the distal ends 32b, when not pressed against the cord 10, can expand in the radial direction 1b such that the cross-section of the cord 10 at the distal ends 32b has a radial extension greater than the dimensions of the access 20a.

In this way, the interaction between the distal ends 32b and the obstruction walls 21, after the insertion of the element 3 into the first cavity 20, prevents the separation of the cord 10 and the tip 2. In fact, once the element 3 is completely inserted into the cavity 20, the interference elements 32 are pushed away from the cord 10, due to its expansion in the radial direction 1b following its introduction into the cavity 20. Once extended beyond the radial dimensions of the access 20a, the distal ends 32b can interact with the obstruction walls 21 preventing the extraction of the first end 11 from the cavity 20. This interaction between the element 3 and the tip 2 is advantageous, as it allows for a connection to be created by exploiting the simple shapes of the tip 2 and the element 3. Consequently, the device 1 has the advantage of being able to allow effective coupling of the cord 10 to the tip 2 without requiring complex production processes of the components.

In this regard, the tip 2 can preferably be made of a material having greater hardness than the material of the element 3. In this way, the interaction between the distal portion 31b or the distal ends 32b and the obstruction walls 21 is made more effective. In fact, said interaction does not involve the deformation of the obstruction walls 21, which could cause the first end 11 to come out when the cord 10 is pulled in the opposite direction to the insertion into the access 20a.

The tip 2 may preferably be made of metal. In fact, it is the material that allows us to guarantee the characteristics of hardness and resistance required to ensure that the interaction between the distal ends 32b and the obstruction walls 21 is effective. Further, the metal tip 2 can also serve an aesthetic function. Furthermore, the tip 2 can have an externally cylindrical symmetrical shape with its axis aligned with the development line 1a. Alternatively, the tip 2 may have a parallelepiped shape with a development axis aligned with the development line 1a or the like.

The element 3 can preferably be made using a semi-finished product. In particular, it can consist of a partially rigid covering element constrained at the first end 11. The semi-finished product can compress the first cord 10 in the radial direction 1b. Further, the semi-finished product can be continuous in the circumferential direction 1c. In particular, it can have substantially constant dimensions in the radial direction 1b. For example, it may be a cylindrical element with the axis aligned with the development line 1a. Alternatively, the semi-finished product may be a spherical cover constrained at the first end 11. In general, the semi-finished product can have a substantially circular cross-section in the radial direction 1b.

The distal ends 32b can be obtained by cutting the semi-finished product. In particular, the cuts can also extend in a direction parallel to the development line 1a. In this way, the interference elements 32 are produced. The distal ends 32b may detach from the cord 10 so that they can interact with the obstruction walls 21 when the first end 11 is inserted into the cavity 20. Therefore, the element 3 can be advantageously produced by making cuts in the semi-finished product. Therefore, the device 1 has the advantage of being able to be produced via a simple production method.

The operation of the device 1 previously described in structural terms is as follows. The device 1, as anticipated, can be initially produced by cutting the semi-finished product in directions parallel to the development line 1a. Therefore, the semi-finished product can already be constrained to the first end 11 (for example by gluing) and be subjected to cutting to create an element 3 already constrained to the first end 11. Alternatively, the element 3 can be produced by making cuts in the semi-finished product and constrained to the first end 11 afterwards. Once the element 3 is obtained and constrained to the first end 11, the latter can be inserted into the access 20a. During insertion into the access 20a, the interference elements 32 are partially deformed. In detail, the distal ends 32b are pushed, from the edges of the access 20a, towards the cord 10. Therefore, when entering into the access 20a, the distal ends 32b are pushed radially towards the cord 10. The cord 10 can be locally compressed at the portion in proximity to the access 20a. The first end 11 can then pass through the access 20a during insertion into the cavity 20. Once the element 3 is completely inserted with the first end 11 into the cavity 20, the distal ends 32b are pushed radially by the cord 10, which expands in the radial directions 1b following insertion into the cavity 20. The distal ends 32b are at a radial distance such that they interact with the obstruction walls 21, when the cord 10 is pulled from the outside causing the first end 11 to move towards the access 20a. Therefore, the distal ends 32b are located at a greater radial distance than the dimensions of the access 20a. Consequently, they interact with the obstruction walls 21, obstructing the extraction of the first end 11 from the cavity 20.

The device 1 according to the invention achieves important advantages.

In fact, it requires less complex production processes. In particular, the production process of the element 3 is a process requiring few steps. In fact, it is sufficient to product a heat-sealed semi-finished product or that is only partially bonded to the end of the cord. In the configuration in which the interference elements 32 are present it is sufficient to carry out simple cutting operations on the semi-finished product to make the element 3. Further, the tip 2 can be made so that it has simple geometries. In fact, there is no need for the presence of additional structural elements apart from the obstruction walls, to guarantee the effective coupling of the element 3 to the first end 11. In detail, it is not necessary to produce additional elements at the obstruction walls 21 which allow for the interaction of the distal ends 32b with the obstruction walls 21 to be facilitated. The simplified production process also reduces the costs associated with it.

Another advantage of the device 1 comes from the reduced complexity of its structure. In particular, the tip 2 and the element 3 can have a simple structure, even made of just one element each. Further, as already described, they do not have additional elements or portions with complex geometries.

The device 1 also allows for effective coupling.

The device 1 has the advantage of guaranteeing a high seal over time.

The invention is subject to variations within the scope of the inventive concept defined by the claims. Within this scope, all details can be replaced by equivalent elements, and materials, shapes, and dimensions may be any.

## Claims

1. Coupling device (1) for a cord (10), said cord (10) for an item of clothing, defining a main development line (1a), a radial direction (1b), a circumferential direction (1c) and a first end (11),
said device (1) comprising:
- a tip (2) suitable for containing said first end (11) and defining:
- a first internal cavity (20) suitable for containing said first end (11);
- an access (20a) to said first cavity (20);
- a partially rigid covering element (3) constrained to said first end (11) and compressing said first cord (10) in the radial direction (1b), said element (3) being intended to be housed in said first cavity (20) when constrained to said first end (11) and defining a first portion (30) proximal to said cord (10);
and **characterised in that:**
- said first cavity (20) has dimensions in radial direction (1b) greater than said access (20a), the edge of said access (20a) defining obstruction walls (21) extending in radial direction (1b);
- said element (3) includes a second flexible portion (31) in said radial direction (1b);
- said second portion (31) defining a proximal portion (31a) constrained to said first portion (30) and a distal portion (31b) opposite to said proximal portion (31a);
- said second portion (31) being stressed by said cord (10) in the radial expansion direction (1b) and being deformable to allow the insertion of said element (3) entirely into said first cavity (20) through said access (20a), so that the interaction between said distal portion (31b) and said obstruction walls (21), after the insertion of said element (3) into said first cavity (20), prevents the separation of said cord (10) and said tip (2).

2. Device (1) according to claim 1, wherein said second portion (31) comprises a plurality of interference elements (32) flexible at least in said radial direction (1b) and each occupying a portion of said cord (10) in said circumferential direction (1c), said interference elements (32) each defining a free distal end (32b) and a proximal end (32a) constrained to said first portion (30) and opposite to said proximal end (32a);
- said distal ends (32b) being stressed by said cord (10) in the radial expansion direction (1b) and being deformable to allow the insertion of said element (3) entirely into said first cavity (20) through said access (20a), so that the interaction between said distal ends (32b) and said obstruction walls (21), after the insertion of said element (3) into said first cavity (20), prevent the separation of said cord (10) and said tip (2).

3. Device (1) according to the preceding claim, wherein said element (3) is made through:
- a semi-finished product, consisting of a partially rigid covering element constrained to said first end (11) and compressing said first cord (10) in the radial direction (1b), said semi-finished product also being continuous in the circumferential direction (1c), substantially of constant size in the radial direction (1b);
- said distal ends (32b) being obtained by cuts of said semi-finished product, also extending in a direction parallel to said development line (1a).

4. Device (1) according to at least one of claims 2-3, wherein said interference elements (32) are primarily developed along a plane.

5. Device (1) according to any one of claims 2-4, wherein said interference elements (32) are comprised in number between 2 and 8.

6. Device (1) according to any one of the preceding claims, wherein said access (20a) is centred on said development line (1a).

7. Device (1) according to any one of the preceding claims, wherein said first portion (30) has a cylindrical shape with its axis aligned with said development line (1a).

8. Device (1) according to any one of the preceding claims, wherein said element (3) is made of polymeric material and is constrained to said first end (11) by adhesive or heat-sealing.

9. Device (1) according to any one of the preceding claims, wherein said tip (2) is made of a material having greater hardness than the material of said element (3).

10. Device (1) according to any one of the preceding claims, wherein said cord (10) consists of a bundle of twisted threads.

11. Cord (10) for an item of clothing comprising a coupling device (1) according to any one of the preceding claims.

12. Item of clothing comprising at least one cord (10) according to the preceding claim.
